# FASCICULE DE BREVET EUROPEEN

(11) **EP 1 597 636 B1**
(45) Date de publication et mention de la délivrance du brevet: **03.01.2007**
(21) Numéro de dépôt: 04761981.2
(22) Date de dépôt: 28.10.2004
(51) Int. Cl.: G04B 39/00, B29C 41/20

(54) **PROCEDE D'INTEGRATION D'AU MOINS UN MODULE ELECTRONIQUE DANS OU SUR LA GLACE D'UNE MONTRE**
VERFAHREN ZUM INTEGRIEREN MINDESTENS EINES ELEKTRONISCHEN MODULS IN ODER AUF DEM GLAS EINER UHR
METHOD FOR INTEGRATING AT LEAST ONE ELECTRONIC MODULE IN OR ON THE GLASS OF A WATCH

(30) Priorité: 24.04.2004 CH 7112004
(43) Date de publication de la demande: 23.11.2005
(73) Titulaire: Winwatch SA, 1964 Conthey (CH)
(72) Inventeur: KALBERMATTEN, Alex, CH-1950 Sion (CH); D'ONGHIA, Gianni, CH-1958 Uvrier (CH); KALBERMATTEN, Jean-Pierre, CH-1965 Savièse (CH)
(86) Numéro de dépôt international: PCT/CH2004/000649
(87) Numéro de publication internationale: WO 2005/064421

(56) Documents cités:
- EP-A- 0 573 958
- EP-A- 0 903 648
- EP-A- 1 122 620
- CH-A- 608 326
- CH-A- 692 069
- US-A- 5 172 348
- US-A- 5 401 561
- US-A- 5 768 217
- US-B1- 6 484 947

## Description

La présente invention concerne un procédé d'intégration d'au moins un module électronique dans ou sur la glace d'une montre, selon la revendication indépendante 1.

Il est bien connu d'équiper des montres, généralement des montres-bracelets, de tels modules électroniques pour la mémorisation d'informations qui comprennent une puce de circuit intégré (chip) reliée à une antenne et qui peuvent communiquer par des signaux radio diffusés avec un appareil de lecture et/ou d'écriture externe. Ces modules électroniques, communément appelés transpondeur ou étiquette électronique, sont souvent de type passif, l'énergie leur étant fournie par les fréquences radio émises par le lecteur. Selon les différents modes de réalisation connus, le module électronique est intégré soit dans la lunette, dans la carrure-lunette, sous le cadran, dans le boîtier de montre, sur ou dans le couvercle du fond du boîtier de la montre, dans l'organe de contrôle comme la couronne, ou bien dans le bracelet de la montre. L'idée d'intégrer de tels modules électroniques dans la montre étant d'utiliser des progrès obtenus dans le domaine des systèmes d'identification en fréquence radio (RFID), en vue d'améliorer la protection de la montre et de ses composants contre des imitations ou des contrefaçons, ou bien permettant le suivi de la montre tout au long de sa vie pour utiliser les données à des fins de contrôle de qualité, de service après-vente et de garantie, de la gestion des stocks, ou de publicité et de marketing, ou offrant des développements et applications ne concernant pas la montre, comme par exemple le contrôle d'accès ou d'identité du porteur de la montre.

Par les divulgations des brevets CH692069A5 et CH689360A5, il est également connu d'équiper une glace de montre d'une puce électronique reliée à une antenne, destinée à transmettre à un lecteur externe, les informations contenues dans la puce électronique.

Néanmoins, aucune des divulgations connues à ce jour, n'offre un procédé qui solutionne parfaitement et précisément l'intégration dudit module électronique dans ou sur la glace d'une montre. Au vu des caractéristiques spécifiques des glaces de montres communément utilisées, en particulier celles utilisées de préférence pour des montres de luxe, qui sont souvent faites en verre minéral au profit d'un verre organique, il convient de trouver un procédé d'intégration du module électronique adapté aux spécificités d'un support comme par exemple la matière cristalline transparente dure de la famille du corindon, tel que le saphir ou le spinelle, mais sans en altérer ses aspects physiques, techniques, matérielles, optiques, visuelles ou de transparence. De plus, au vu de la miniaturisation constante des modules électroniques, leur manipulation et leur intégration deviennent de plus en plus compliqués avec les techniques actuellement connues dans la pose et leur fixation. Il convient donc de résoudre également ce problème là. Nous savons qu'actuellement déjà, il y a des modules électroniques disponibles sur le marché, qui ont une taille égale ou inférieure à 0.4mm² et qui prochainement déjà seront plus petit que le dixième de millimètre, et ne seront plus ou très difficilement visibles à l'oeil nu, leurs manipulation pour une intégration adéquate dans la glace d'une montre pose donc un problème technique, qui ne peut plus être résolu par les moyens d'intégration communément utilisés à ce jour et qui touchent très rapidement à leurs limites en ne donnant plus des résultats satisfaisants. La présente invention comble ces lacunes de la manière définie dans les revendications.

L'objet de l'invention vise à résoudre les problèmes susmentionnés et consiste à présenter une solution adaptée pour intégrer des modules électroniques dans une montre-bracelet, et plus particulièrement dans ou sur la glace d'une montre, sans altérer, ou du moins d'une manière peu importante, les caractéristiques desdits modules électroniques ainsi que les spécificités des glaces en matières cristallines, minérales ou organiques.

Le but de la présente invention consiste non seulement à surmonter les spécificités propres aux glaces minérales ou organiques, mais également de faciliter et de résoudre l'intégration, l'implantation, l'incorporation, la fixation, la vitrification et le scellement d'un module électronique dans ou sur la glace d'une montre.

Pour des raisons de clarté, nous avons décidé que le terme de « module électronique » était suffisant à la compréhension de notre solution, et de ne pas utiliser systématiquement le terme de « nano-module électronique » par exemple, bien que sa très petite dimension actuelle et son potentiel de miniaturisation future le destinerait à s'intituler justement avec le préfixe « nano-».

Pour atteindre cet objectif, le procédé est d'appliquer le module électronique avec une solution liquide, semi solide ou gazeuse, se fixant à l'intérieur ou à l'extérieur de la glace. Ladite solution est destinée à se solidifier et à se fixer avec le module électronique à l'intérieur ou à l'extérieur de la glace. Il permettra également de combler le vide d'un évidement prévu à cet effet.

Un des avantages essentiels d'un tel procédé est de pouvoir manipuler et également fixer plus précisément le minuscule module électronique, grâce notamment au fait que ledit module est noyé tout d'abord dans une composition non solide et ensuite dirigé, sans risque de le perdre, à son emplacement désiré.

Un autre avantage recherché de l'invention de ce procédé, est de pouvoir être usinés à l'aide de machines et outils conventionnels simples, prévues pour la production en grandes séries.

De plus, les avantages apportés par le mélange de certains composants dans la solution pourront apporter de nombreux avantages au module électronique, à savoir par exemple, une meilleure résistance à l'usure, une meilleure résistance chimique ou thermique, le maintien d'une grande transparence optique dans la glace de montre ou l'absence de porosité.

Grâce à ce procédé, l'altération, la destruction, l'extraction, voir le vol de ce module électronique, pour l'utilisation à d'autres fins que ceux prévu initialement sera pour ainsi dire quasiment impossible sans endommager le module électronique, ou alors une extraction dudit module électronique très peu économique.

D'autres particularités, avantages et caractéristiques de l'invention ressortiront plus clairement de la description qui va suivre d'un mode de réalisation de l'invention donné à titre d'exemple non limitatif, et représenté sur les dessins annexés :

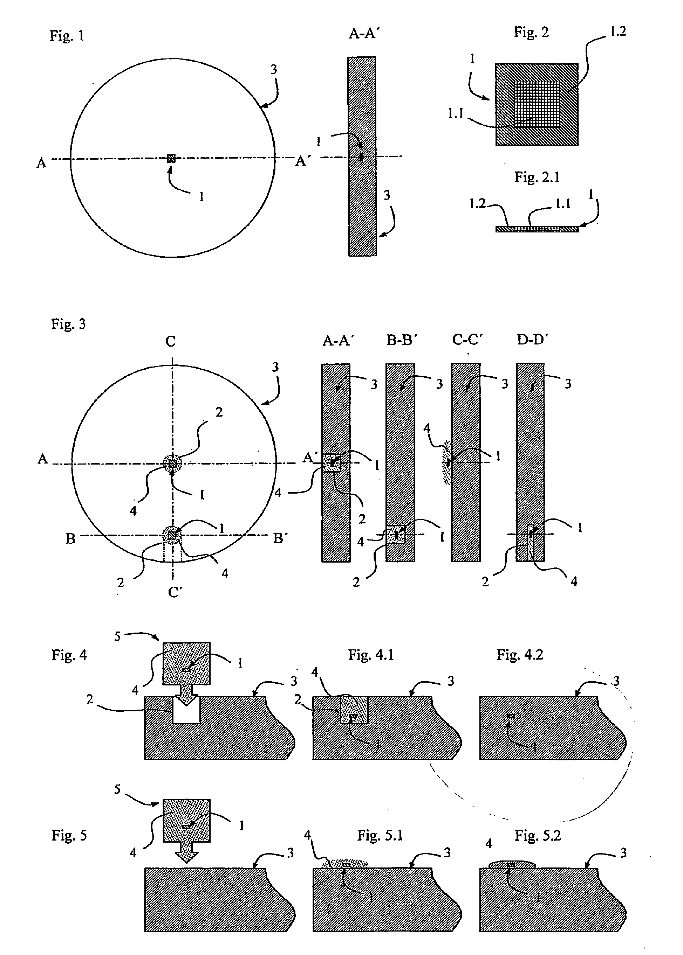

- la figure 1 montre sous une forme schématique une vue d'une face d'une glace inférieure ou supérieure, comprenant un module électronique parfaitement intégré dans ou sur la glace et dont la solution non solide se confond avec la glace, et une vue en coupe agrandie de la glace suivant l'axe (A-A'), où peut être logé le module électronique ;
- les figures 2 et 2.1 représentent schématiquement un module électronique vu de face et de coupe, composé d'une puce de circuit intégré et d'une antenne ;
- la figure 3 montre sous une forme schématique une vue d'une face d'une glace inférieure ou supérieure, comprenant un module électronique dans son axe centrale, logé dans un évidement avec une solution non solide selon la vue en coupe agrandie de la glace selon l'axe (A-A') ; d'autres variantes de réalisation avec un module électronique près de la surface extérieure de la glace, logé dans un évidement avec une solution non solide selon la vue en coupe agrandie de la glace selon l'axe (B-B') ou bien dans une autre variante selon l'axe (D-D'), ainsi que la vue de coupe agrandie de la glace, où est logé le module électronique sur la glace avec la solution non solide dans une variante selon l'axe (C-C') ;
- les figures 4, 4.1 et 4.2 représentent le procédé d'intégration du module électronique dans la glace de la montre sous une forme schématique, à savoir l'injection de la solution non solide avec le module électronique dans un évidement prévu à cet effet, un dosage suffisant pour colmater la cavité et enfin la glace comprenant le module électronique, parfaitement intégré grâce à la solution non solide qui est vitrifiée ;
- les figures 5, 5.1 et 5.2 représentent le procédé d'application du module électronique sur ou sous la glace de la montre sous une forme schématique, à savoir l'application de la solution non solide avec le module électronique sur la glace, un dosage de la solution non solide selon les besoins, à savoir autour du module uniquement ou sur toute la surface de la glace par exemple, et enfin le mariage parfait du module électronique avec la glace suite à la vitrification de la solution non solide.

Pour des raisons de clarté, nous avons décidé de définir préalablement la terminologie utilisée dans la présente description d'un mode de réalisation préférentiel avec la numérotation suivante :
- 1 =: module électronique ou transpondeur ou nano-module électronique
- 1.1 =: puce de circuit intégré / puce de circuit intégré (chip)
- 1.2 =: antenne
- 2 =: évidement / logement
- 3 =: glace de montre
- 4 =: solution / solution non solide / solution résineuse
- 5 =: machine / outil

Bien que l'invention ne soit évidemment pas limitée à une telle forme de réalisation, la description qui suit est faite dans le cas où le module électronique (1), dont la glace de montre (3) est équipée, est prévu pour mémoriser des informations qui concernent la montre elle-même ou bien qui sont destinées à d'autres applications qui ne sont pas liées à la montre pour être placé à une faible distance (de quelques millimètres à plusieurs centimètres) de l'antenne d'émission et de réception d'un appareil de lecture et/ou d'écriture non représenté sur le dessin avec lequel il est amené à communiquer. Ladite technologie de transmission de données sur laquelle repose la présente invention utilise communément l'identification par radiofréquence (RFID) qui ne sera pas décrite ici, car elle fait partie de l'état de la technique et est connue depuis longtemps déjà et largement utilisée dans l'industrie.

Cela dit et par souci de précision, la glace de montre (3) qui est représentée schématiquement à la figure 1 comprend en tant que produit fini un module électronique (1) qui est constitué d'une puce de circuit intégré (chip) (1.1) reliée à une antenne (1.2) comme cela est représenté schématiquement à la figure 2 et figure 2.1.

La présente forme de réalisation consiste à incorporer le module électronique (1) dans une solution résineuse organique, transparente et liquide (4), à base époxy, mélangée avec un durcisseur ou accélérateur et des agents chimiques photo-amorceurs sensibles à un rayonnement lumineux pour effectuer la polymérisation, et ensuite d'injecter le tout, comme représenté schématiquement sur la figure 4, à l'aide d'un dispositif ou d'une machine (5), dans le petit évidement (2) de la glace (3) prévue à cet effet, de préférence circulaire et de préférence dans l'axe centrale de la glace (3), eu égard à un avantage optique certain qui découle d'un tel emplacement car l'axe centrale de la glace (3) est réputé être le point le moins esthétique de la montre et cachant en même temps le module électronique (1) aussi minuscule soit-il, par l'axe des aiguilles de la montre. Mais bien entendu d'autres emplacements et logements du module électronique (1) sont possibles, comme par exemple de loger ledit module électronique (1) près de la surface extérieure de la glace (3) selon la vue en coupe agrandie de la glace selon l'axe (B-B') ou bien, l'évidement (2) est usiné dans la face latérale de la glace selon l'axe (D-D'), offrant par là un important avantage, celui de maintenir intact l'aspect général, l'intégrité structurelle, physique et superficielle d'origine de la face intérieure ou extérieure de la glace (3), maintenant ainsi les résistances premières de la glace (3) contre les fractures, fissures, pressions ou autres chocs externes.

Suite à l'injection de la solution résineuse (4) comprenant le module électronique (1) dans l'évidement (2), voir représentation schématique de la figure 4.1, ledit évidement (2) est présenté à un rayonnement lumineux, notamment à ultraviolets, pour faire durcir la solution résineuse (4), rendant la surface ainsi traitée, rapidement dure et lisse, comparable à celle de la glace (3) de la montre, voir représentation schématique de la figure 4.2, et facilitant la fabrication en série.

Les procédés d'usinage comme par exemple de meulage, de polissage, de gravure, d'usinage par ultrasons, de forage ou d'abrasion au laser, etc. dudit évidement (2), ainsi que les procédés d'injection ou de dispersion de la solution résineuse, la composition de la solution (4), pas plus que les machines (5) appropriées permettant de mettre en oeuvres ces procédés ne seront décrits car se sont des procédés, procédés de fabrication, produits et des machines bien connus et également utilisées depuis longtemps dans l'industrie, en particulier pour l'usinage en grande série de pièces. La solution (4) peut-être composée d'autres types de mélange de colmatage liquides ou semi-liquides, compatible avec la glace. L'essentiel étant qu'une fois injectée, cette solution (4) se moule, se durcit et s'intègre parfaitement dans son support qu'est la glace (3), en protégeant ainsi d'une manière optimale le module électronique (1), contre toute agression chimique, mécanique, thermique, électrostatique, magnétique, etc., tout en maintenant les mêmes caractéristiques de transparence optique de la glace (3).

Une autre variante de réalisation, conformément aux figures 5, 5,1 et 5.2, se différencie uniquement par l'absence d'évidement (2) dans la glace (3). La solution comprenant le module électronique (1) venant dès lors appliquée sur la glace (3).

Cette autre variante de réalisation consiste à incorporer le module électronique (1) dans une solution résineuse organique, transparente et liquide ou bien gazeuse (4), à base époxy, mélangée avec un durcisseur ou accélérateur et des agents chimiques photo-amorceurs sensibles à un rayonnement lumineux pour effectuer la polymérisation, et ensuite d'appliquer le tout, comme représente schématiquement sur la figure 5, à l'aide d'un dispositif ou d'une machine appropriée (5), sur la face intérieure ou extérieure de la glace (2), et également de préférence dans l'axe centrale de la glace (3), eu égard à l'avantage optique décrit précédemment. Mais bien entendu d'autres emplacements sur la glace (3) de montre restent possibles.

Suite à l'application de la solution résineuse (4) comprenant le module électronique (1) sur la glace (3), voir la représentation schématique de la figure 5.1, la partie de la glace (3) portant la solution résineuse (4) comprenant le module électronique (1) est présenté à un rayonnement lumineux, notamment à ultraviolets, pour faire durcir la solution résineuse (4), rendant la surface ainsi traitée, rapidement dure et lisse, comparable à celle de la glace (3) de la montre, voir représentation schématique de la figure 5.2, et facilitant la fabrication en série. Cette autre variante de réalisation conviendrait très bien pour des modules électroniques (1) que nous pourrions intituler nano-modules électroniques (1) car extrêmement petits et légers, pouvant même être fixés avec la solution (4) sur la glace (3), par un dispositif de vaporisation ou de soufflage (5).

Une autre variante de réalisation consiste à poser le nano-module électronique (1) sur la glace (3) ou à l'introduire dans l'évidement (2) et d'appliquer, d'injecter ou de vaporiser (5) par la suite la solution (4) sur ledit module (1) ou alors, d'effectuer le processus inverse, à savoir appliquer, injecter ou vaporiser (5) la solution (4) et d'y noyer le nano-module électronique (1) par la suite.

Il est bien entendu que la glace de montre (3) qui vient d'être décrite selon le mode de réalisation et ses différentes variantes, peut encore subir d'autres modifications pour une intégration optimale du module électronique (1) dans ladite glace (3), et par là se présenter sous d'autres variantes, évidentes pour l'homme du métier, sans sortir du cadre de la présente invention.

En particulier la glace (3) pourrait avoir une autre forme que ronde, et les faces principales pourraient présenter une certaine courbure. Tout matériau dur et optiquement transparent, incolore ou coloré, pourrait convenir comme glace de montre.

Enfin les évidements (2) destinés à recevoir le module électronique (1) pourraient s'écarter des formes géométriques simples, comme la forme préférentielle décrite dans le mode de réalisation et être réalisés en différentes formes géométriques, et bien entendu par la même en différentes dimensions, volumes et profondeurs. Enfin, d'autres développements et applications sont également imaginables en ce qui concerne la technologie des modules électroniques (1) qui sont utilisés dans la présente invention. On peut également noter que la structure et les fonctionnalités classiques de la montre, en particulier de la montre-bracelet, de la glace de montre (3), ainsi que du module électronique (1) n'ont été abordées dans la présente description, dans la mesure où ces notions sont parfaitement connues de l'homme de métier et ne concernent par directement le sujet de la présente invention.

## Revendications

1. Procédé d'intégration dans la glace d'une montre (3) d'au moins un module électronique (1) pour la mémorisation d'informations, module électronique comprenant une puce de circuit intégré (1.1) reliée à une antenne (1.2) et qui peut communiquer par des signaux radio diffusés avec un appareil de lecture et/ou d'écriture, **caractérisé en ce que** ledit module électronique (1) est injecté, appliqué ou apposé sur ou dans la glace (3) au moyen d'une solution liquide, semi-solide ou gazeuse, solution (4) qui est destinée à se solidifier et à se fixer avec le module électronique à l'intérieur ou à l'extérieur de la glace (3), et qui scelle définitivement ledit module électronique (1) dans ou sur la glace (3).

2. Procédé selon la revendication 1, **caractérisé en ce qu'**il comporte les étapes successives consistant à :
- former par usinage dans une face de la glace (3) un évidement (2), destiné à recevoir la solution (4) ainsi que le module électronique (1),
- injecter à l'aide d'une machine ou d'un outil (5), la solution (4) avec le module électronique (1) dans l'évidement (2), et
- sceller définitivement dans la glace (3) le module électronique (1) par la solution (4).

3. Procédé selon la revendication 1, **caractérisé en ce que** la solution (4) comprenant le module électronique (1) est apposée sur une face de la glace (3) au moyen d'une machine ou d'un outil (5) et scelle définitivement ledit module électronique (1) sur la glace (3).

4. Procédé selon l'une des revendications précédentes, **caractérisé en ce que** le module électronique (1) est posé sur la glace (3) ou est introduit dans l'évidement (2) formé par usinage dans une face de la glace (3) et par la suite la solution (4) est appliquée, injectée ou vaporisée sur ledit module (1) et scelle définitivement ledit module électronique (1) dans ou sur la glace (3).

5. Procédé selon l'une des revendications 1 à 3, **caractérisé en ce que** la solution (4) est appliquée, injectée ou vaporisée sur la glace (3) et **en ce que** le module électronique est noyé par la suite dans la solution (4) qui scelle définitivement ledit module électronique (1) dans ou sur la glace (3).

6. Procédé selon l'une des revendications 1, 2, 3, 4 ou 5, **caractérisé en ce que** la surface de la glace (3) comprenant la solution (4) et le module électronique (1), soit exposée à un rayonnement lumineux, notamment à ultraviolets, pour faire durcir rapidement ladite solution (4).

7. Procédé selon l'une des revendications 1, 2, 3, 4 ou 5, **caractérisé en ce que** la solution (4) est de la résine synthétique ou naturelle, de la résine époxy, un produit gazeux, ou une matière à une où plusieurs composantes.

8. Procédé selon la revendication 2, 4 ou 5, **caractérisée en ce que** la solution (4) remplit totalement l'évidement (2).

## Claims

1. Method for integrating at least one electronic module (1) in the glass (3) of a watch for the memorising of information, the electronic module including an integrated circuit chip (1.1) connected to an antenna (1.2) and that can communicate by radio signals diffused with a reading and/or writing device, **characterized in that** the aforementioned electronic module (1) is injected, positioned or affixed on or in the glass (3) by means of a liquid, semi-solid or gaseous solution, solution (4) which is intended to solidify and to be fixed with the electronic module (1) inside or outside the glass (3), and which seals definitively the aforementioned electronic module (1) in or on the glass (3).

2. Method according to claim 1, **characterized in that** it comprises the successive steps consisting of:
- forming by machining in a face of the glass (3) a cavity (2), intended for to receive the solution (4) as well as the electronic module (1),
- injecting with the help of a machine or of a tool (5), the solution (4) with the electronic module (1) in the cavity (2), and
- the solution (4) seals definitively the electronic module (1) in the glass (3).

3. Method according to claim 1, **characterized in that** the solution (4) including the electronic module (1) is affixed on a face of the glass (3) by means of a machine or of a tool (5) and seals definitively the aforementioned electronic module (1) on the glass (3).

4. Method according to one of the preceding claims, **characterized in that** the electronic module (1) is put on the glass (3) or is introduced into the cavity (2) formed by machining in a face of the glass (3) and the solution (4) is applied, injected or vaporized thereafter on the aforementioned module (1) and seals definitively the aforementioned electronic module (1) in or on the glass (3).

5. Method according to one of the claims 1 to 3, **characterized in that** the solution (4) is applied, injected or vaporized on the glass (3) and drowning the electronic module (1) thereafter in the solution (4) which seals definitively the aforementioned electronic module (1) in or on the glass (3).

6. Method according to one of the claims 1, 2, 3, 4 or 5, **characterized in that** the glass (3) surface including the solution (4) and the electronic module (1) is exposed to a light radiation, in particular with ultraviolet rays, to make harden quickly the aforementioned solution (4).

7. Method according to one of the claims 1, 2, 3, 4 or 5, **characterized in that** the solution (4) is a synthetic or natural resin, an epoxy resin, a gaseous product, or a material with one or several components.

8. Method according to claim 2, 4 or 5, **characterized in that** the solution (4) fills completely the cavity (2).

## Patentansprüche

1. Verfahren zum Integrieren mindestens eines elektronischen Moduls (1) zur Speicherung von Informationen in das Glas (3) einer Uhr, elektronisches Modul (1), welches eine integrierte Schaltung (Chip) (1.1) verbunden mit einer Antenne (1.2) enthält und welches durch gesendete Radiosignale mit einem Lese- und/oder Schreibgerät kommunizieren kann, **dadurch gekennzeichnet, dass** das erwähnte elektronische Modul (1) mittels einer flüssigen, halbfesten oder gashaltigen Lösung (4) in oder auf das Glas (3) eingespritzt, aufgetragen oder angebracht wird, Lösung (4) welche vorgesehen ist sich auszuhärten und sich zusammen mit dem elektronischen Modul (1) innen im oder aussen am Glas (3) zu fixieren und welche das erwähnte elektronische Modul (1) in oder auf dem Glas (3) endgültig versiegelt.

2. Verfahren gemäss Anspruch 1, **dadurch gekennzeichnet, dass** es die nacheinanderfolgenden Schritte beinhaltet :
- maschinelle Formung einer Aushöhlung (2) auf einer Seite des Glases (3), welche vorgesehen ist die Lösung (4) sowie das elektronische Modul (1) zu enthalten und
- Einspritzen der Lösung (4) mit dem elektronischen Modul (1) in die Aushöhlung (5) mittels einer Maschine oder eines Werkzeugs (5) und
- endgültiges Versiegeln des elektronischen Moduls (1) im Glas (3) durch die Lösung (4).

3. Verfahren gemäss Anspruch 1, **dadurch gekennzeichnet, dass** die Lösung (4) zusammen mit dem elektronischen Modul (1) auf einer Seite des Glases (3) mittels einer Maschine oder eines Werkzeuges (5) angebracht wird, und das erwähnte elektronische Modul (1) auf dem Glas (3) entgültig versiegelt.

4. Verfahren gemäss einem der vorherigen Ansprüche, **dadurch gekennzeichnet, dass** das elektronische Modul (1) auf das Glas (3) gelegt oder in die maschinell auf einer Seite des Glases (3) ausgearbeitete Aushöhlung (2) hineingelegt wird, und anschliessend die Lösung (4) auf das elektronische Modul (1) aufgetragen, eingespritzt oder aufgesprüht wird und das erwähnte elektronische Modul (1) in oder auf dem Glas (3) endgültig versiegelt.

5. Verfahren gemäss einem der Ansprüche 1 bis 3, **dadurch gekennzeichnet, dass** die Lösung (4) auf das Glas (3) aufgetragen, eingespritzt oder aufgesprüht wird und dass anschliessend das elektronische Modul (1) in die Lösung (4) eingetaucht wird, die das erwähnte elektronische Modul (1) in oder auf dem Glas (3) endgültig versiegelt.

6. Verfahren gemäss einem der Ansprüche 1, 2, 3, 4 oder 5, **dadurch gekennzeichnet, dass** die Fläche des Glases (3) die die Lösung (4) und das elektronische Modul (1) trägt, einer Lichtstrahlung, insbesondere Ultraviolettstrahlen, ausgesetzt wird, um die Lösung (4) rasch auszuhärten.

7. Verfahren gemäss einem der Ansprüche 1,2,3,4 oder 5, **dadurch gekennzeichnet, dass** die Lösung (4) aus einer künstlichen oder organischen Harzlösung, aus einer Harzlösung basierend auf Epoxy, aus einem gashaltigen Produkt, oder sonstigen Materie mit einer oder mehreren Komponenten besteht.

8. Verfahren gemäss Anspruch 2, 4 oder 5, **dadurch gekennzeichnet, dass** die Lösung (4) die Aushöhlung (2) völlig ausfüllt.
